(19) Europäisches Patentamt
European Patent Office
Office européen des brevets

(11) EP 2 243 806 B1

(12) **EUROPEAN PATENT SPECIFICATION**

(45) Date of publication and mention of the grant of the patent:
**28.03.2012 Bulletin 2012/13**

(21) Application number: **08868397.4**

(22) Date of filing: **25.12.2008**

(51) Int Cl.:
***C09C 1/56*** *(2006.01)* ***C09C 3/08*** *(2006.01)*
***C09C 1/48*** *(2006.01)* ***C09D 11/00*** *(2006.01)*

(86) International application number:
**PCT/JP2008/073927**

(87) International publication number:
**WO 2009/084714 (09.07.2009 Gazette 2009/28)**

(54) **METHOD OF PRODUCING AN AQUEOUS DISPERSION OF SURFACE-TREATED CARBON BLACK**

VVERFAHREN ZUR HERSTELLUNG EINER WÄSSRIGEN DISPERSION VON OBERFLÄCHENBEHANDELTEM RUSS

PROCÉDÉ DE FABRICATION D'UNE DISPERSION AQUEUSE DE NOIR DE CARBONE TRAITÉ EN SURFACE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **27.12.2007 JP 2007336706**

(43) Date of publication of application:
**27.10.2010 Bulletin 2010/43**

(73) Proprietor: **Tokai Carbon Co., Ltd.**
**Minato-ku**
**Tokyo 107-8636 (JP)**

(72) Inventor: **SEKIYAMA, Makoto**
**Tokyo 107-8636 (JP)**

(74) Representative: **Müller-Boré & Partner Patentanwälte**
**Grafinger Straße 2**
**81671 München (DE)**

(56) References cited:
**JP-A- 11 256 067**
**JP-A- 2004 053 726**
**JP-A- 2005 255 705**
**JP-A- 2005 255 705**
**JP-A- 2007 045 901**
**US-A1- 2001 024 749**
**US-A1- 2004 138 503**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 243 806 B1

## Description

The present invention relates to a method of producing a surface-treated carbon black aqueous dispersion that may be used as an aqueous black ink for inkjet printers or the like, and a method of producing the same. More particularly, the present invention relates to a surface-treated carbon black aqueous dispersion that may be suitably used as an aqueous black ink for line-head printers in which inkjet heads are secured vertically with respect to the transfer direction of a recording medium, and a method of producing the same.

An inkjet printer discharges ink droplets from a minute nozzle head to record characters or figures on the surface of a recording medium such as paper. Typical inkjet printing methods include a Bubble Jet (registered trademark) method and a piezo method. In recent years, color development, gamut, durability, and discharge capability have been significantly improved along with an increase in the number of application fields, so that high-quality image can be obtained.

A dye or a pigment has been used as an inkjet recording ink. A pigment is generally advantageously used from the viewpoint of image reliability (e.g., water resistance and light resistance). In particular, a black pigment such as carbon black is indispensable for business applications in which characters are mainly printed. A number of aqueous pigment inks optimized for the printing method and the printing speed have been provided.

In business applications, an increase in printing speed and development of ink that does not require special paper have been desired. Therefore, a pigment that deals with high-speed printing has been desired.

Carbon black is useful as a black ink pigment. However, it is difficult to stably disperse carbon black in water at a high concentration due to hydrophobicity and low wettability with water. Therefore, a method that subjects carbon black to a surface treatment (particularly oxidation) to form a hydrophilic functional group on the surface of carbon black has been developed.

For example, JP-A-48-18186 discloses a method that oxidizes carbon black with a hypohalite aqueous solution. JP-A-8-319444 discloses a method that introduces a number of hydrophilic active hydrogen groups into the surface of carbon black by oxidation to improve and stabilize the dispersibility of carbon black in an aqueous medium. JP-A-11-49974 discloses a method that introduces a sulfonic acid group into carbon black and treats the resulting carbon black with a monovalent metal ion. JP-A-9-286938 discloses a method that treats carbon black with a hypohalite, substitutes an acidic group with an alkali metal salt, and adds an amine compound.

A method that modifies the surface of carbon black using an organic radical has also been proposed. For example, JP-A-11-323229 discloses a recording ink in which a coloring material is dispersed in an aqueous medium, wherein the coloring material is carbon black of which the surface is chemically bonded to a functional group produced by decomposition of a radical generator that is an azo compound shown by A1-N=N-A2.

The applicant subjected a carboxyl group produced by liquid-phase oxidation of carbon black and the end amine of polyethylenimine to polycondensation, and confirmed that an aqueous dispersion prepared by dispersing the resulting carbon black in water exhibits improved water dispersibility and adhesion to a print media, and ensures that the resulting printed matter exhibits improved water resistance (see JP-A-2005-255705).

DISCLOSURE OF THE INVENTION

In JP-A-2005-255705, carbon black subjected to liquid-phase oxidization is heated to 100°C or more (subjected to dehydration-condensation) in a polyethylenimine solution without using a catalyst, so that the end amino group of polyethylenimine (polyfunctional polyamine) is grafted to the carboxyl group on the surface of carbon black. However, since polyethylenimine is used, an aqueous medium cannot be used as the reaction solvent.

Moreover, since an addition reaction between polyethylenimines occurs as a side reaction, a network is formed between the polymers that are chemically bonded to the surface of carbon black.

An object of the present invention is to solve the above technical problems, and provide a surface-treated carbon black aqueous dispersion that may be suitably used as an aqueous black ink for inkjet printers or the like (particularly for line-head printers in which inkjet heads are secured vertically with respect to the transfer direction of a recording medium), and a method of producing the same.

The inventors of the present invention conducted extensive studies, and found that the above technical problems can be solved by a surface-treated carbon black aqueous dispersion obtained by oxidizing carbon black to produce a hydrophilic surface functional group, dispersing the carbon black in water to obtain an aqueous dispersion, adding an amino group-containing compound and a triazine condensing agent to the aqueous dispersion, causing the hydrophilic surface functional group of the carbon black and the amino group-containing compound to undergo a dehydration-condensation reaction by stirring the aqueous dispersion at room temperature, and removing large particles, unreacted amino group-containing compound, a decomposition product of the triazine condensing agent, and unreacted triazine condensing agent, followed by neutralization, purification, and concentration. This finding has led to the completion of the present invention.

Specifically, the present invention provides the following.

(1) A surface-treated carbon black aqueous dispersion comprising an aqueous medium and surface-treated carbon black that is dispersed in the aqueous medium, the surface-treated carbon black having been chemically modified by causing a hydrophilic surface functional group of the carbon black and an amino group-containing compound to undergo a dehydration-condensation reaction in the presence of a triazine condensing agent to form an amide bond.
(2) The surface-treated carbon black aqueous dispersion according to (1), wherein the hydrophilic surface functional group of the carbon black is a carboxyl group.
(3) The surface-treated carbon black aqueous dispersion according to (1) or (2), wherein the surface of the carbon black has a -CO-NR$^1$R$^2$ group (wherein R$^1$ represents a hydrogen atom, an alkyl group, an alkenyl group, an alkynyl group, an alkyl halide group, an aryl group, a hydroxyalkyl group, or an alkoxyalkyl group, and R$^2$ represents a hydrogen atom, an alkyl group, an alkenyl group, an alkynyl group, an alkyl halide group, an aryl group, a hydroxyalkyl group, or an alkoxyalkyl group), a -COO$^-$M$^+$ group (wherein M$^+$ represents a counter ion), and a hydroxyl group, the content of the -CO-NR$^1$R$^2$ group being 150 to 1200 μmol/g and the content of the hydroxyl group being 20 to 150 μmol/g based on the unit mass of the carbon black.
(4) The surface-treated carbon black aqueous dispersion according to any one of (1) to (3), wherein the concentration of the surface-treated carbon black is 5 to 20 mass%.
(5) A method of producing a surface-treated carbon black aqueous dispersion comprising oxidizing carbon black to produce a hydrophilic surface functional group, dispersing the carbon black in an aqueous medium to obtain an aqueous medium dispersion, adding an amino group-containing compound and a triazine condensing agent to the aqueous medium dispersion, causing the hydrophilic surface functional group of the carbon black and the amino group-containing compound to undergo a dehydration-condensation reaction by stirring the aqueous medium dispersion at room temperature, and removing large particles, unreacted amino group-containing compound, a decomposition product of the triazine condensing agent, and unreacted triazine condensing agent, followed by neutralization, purification, and concentration.

A black ink prepared using the surface-treated carbon black aqueous dispersion according to the present invention produces an image that exhibits excellent image density, strike-through resistance, and fixability, and produces a highly reliable high-quality image by high-speed printing. Therefore, the surface-treated carbon black aqueous dispersion may be suitably used as an aqueous black ink used for line-head printers.

According to the method of producing a surface-treated carbon black aqueous dispersion according to the present invention, a surface-treated carbon black aqueous dispersion can be produced using an aqueous medium as a reaction medium while suppressing side reactions and the like by causing a hydrophilic surface functional group of the carbon black and an amino group-containing compound to undergo a dehydration-condensation reaction using a triazine condensing agent.

## BRIEF DESCRIPTION OF THE DRAWINGS

FIG. 1 is a flowchart showing an example of producing a carbon black aqueous dispersion.

## BEST MODE FOR CARRYING OUT THE INVENTION

A surface-treated carbon black aqueous dispersion according to the present invention is described below.

The surface-treated carbon black aqueous dispersion according to the present invention includes an aqueous medium and surface-treated carbon black that is dispersed in the aqueous medium, the surface-treated carbon black having been chemically modified by causing a hydrophilic surface functional group of the carbon black and an amino group-containing compound to undergo a dehydration-condensation reaction in the presence of a triazine condensing agent to form an amide bond.

The carbon black used for the surface-treated carbon black aqueous dispersion according to the present invention is not particularly limited. For example, furnace black, channel black, acetylene black, thermal black, or the like may be appropriately used.

The dispersibility of the carbon black in the aqueous medium and the ink performance are significantly affected by the colloidal properties of the carbon black, such as the specific surface area by nitrogen adsorption ($N_2SA$) and DBP absorption (i.e., the amount of dibutyl phthalate absorbed by 100 g of carbon black, specified in JIS K 6221). When using the surface-treated carbon black aqueous dispersion according to the present invention as an aqueous black ink used for inkjet printers or the like, it is preferable that the carbon black used for the surface-treated carbon black aqueous dispersion have a specific surface area by nitrogen adsorption ($N_2SA$) of 100 $m^2$/g or more and a DBP absorption of 50 $cm^3$/100 g or more.

Specific examples of the carbon black include Tokablack #8500, Tokablack #8500F, Tokablack #7550SB, Tokablack #7550F (manufactured by Tokai Carbon Co., Ltd.), #650, #750, MA600, #44B, #44, #45B, MA7, MA11, #47, #45, #33, #45L, #47, #50, #52, MA77, MA8 (manufactured by Mitsubishi Chemical Corp.), FW200, FW2V, FWI, FW18PS, NIpex 180IQ, FW1, Special Black6, S160, S 170 (manufactured by Degussa), Black Pearls 1000M, Black Pearls 800, Black Pearls 880, Monarch 1300, Monarch 700, Monarch 880, CRX 1444, Regal 330R, Regal 660R, Regal 660, Regal 415R, Regal 415, Black Pearls 4630, Monarch 4630 (manufactured by Cabot), Raven 7000, Raven 3500, Raven 5250, Raven 5750, Raven 5000ULTRAII, HV 3396, Raven 1255, Raven 1250, Raven 1190, Raven 1000, Raven 1020, Raven 1035, Raven 1100ULTRA, Raven 1170, Raven 1200 (manufactured by Columbian), DB 1305

(manufactured by KOSCO), Sunblack 700, 705, 710, 715, 720, 725, 300, 305, 320, 325, X25, X45 (manufactured by Asahi Carbon Co., Ltd.), N220, N110, N234, N121 (manufactured by Sid Richardson), Niteron #300 (manufactured by Nippon Steel Chemical Carbon Co., Ltd.), Showblack N 134, N110, N220, N234, N219 (manufactured by Cabot Japan K.K.), and the like.

It is necessary for the carbon black to have a hydrophilic surface functional group that improves the dispersibility of the carbon black in the aqueous medium, and also have a reactive group that undergoes a dehydration-condensation reaction with an amino group to form an amide bond. Examples of the hydrophilic surface functional group include a carboxyl group and a hydroxyl group. A carboxyl group is preferable as the hydrophilic surface functional group from the viewpoint of the reaction selectivity of the condensing agent, since a carboxyl group also functions as the reactive group. A hydroxyl group is not involved in a dehydration reaction due to the condensing agent, but improves the hydrophilicity of the carbon black to some extent. The hydrophilic reactive group may be produced by subjecting the carbon black to gas-phase oxidation or liquid-phase oxidation. The amount of hydrophilic surface functional group may be adjusted by appropriately controlling the oxidation conditions.

Examples of the amino group-containing compound used for the surface-treated carbon black aqueous dispersion according to the present invention include hydrophilic amino group-containing compounds. It is preferable that the amino group-containing compound have 1 to 4 amino groups in the molecule. It is more preferable that the amino group-containing compound be a monoamine compound that has one primary or secondary amino group in the molecule, or an amine compound that has two primary and/or secondary amino groups in the molecule.

If the amino group-containing compound has more than four amino groups, the carbon black is included in the amino group-containing compound, so that the blackness of the resulting ink may decrease. Therefore, the number of amino groups of the amino group-containing compound is preferably 1 to 4, more preferably 1 to 3, and still more preferably 1 or 2.

The amino group-containing compound used for the surface-treated carbon black aqueous dispersion according to the present invention preferably has a molecular weight of 30 to 10,000, more preferably 50 to 5000, and still more preferably 60 to 2000. If the amino group-containing compound has a given number of nitrogen atoms in the molecule, and has a molecular weight within the above range, the amino group-containing compound maintains hydrophilicity so that the surface of the carbon black can be chemically modified in the aqueous medium. If the amino group-containing compound has a molecular weight within the above range, steric hindrance and side reactions due to the amino group-containing compound are reduced. As a result, the amino group-containing compound is uniformly and efficiently bonded to the surface of the carbon black.

The amino group-containing compound used for the surface-treated carbon black aqueous dispersion according to the present invention preferably has a solubility in water having a temperature of 20°C and a pH 6.2 to 7.6 of 1 g/l or more, more preferably 5 g/l or more, and still more preferably 10 g/l or more. If the amino group-containing compound has a solubility in water having a temperature of 20°C and a pH 6.2 to 7.6 of 1 g/l or more, the surface of the carbon black can be chemically modified in the aqueous medium.

Examples of the amino group-containing compound include monoamine compounds shown by the following general formula (I).

$$R^1\text{-NH-}R^2 \qquad (I)$$

wherein $R^1$ represents a hydrogen atom, an alkyl group, an alkenyl group, an alkynyl group, an alkyl halide group, an aryl group, a hydroxyalkyl group, or an alkoxyalkyl group, and $R^2$ represents a hydrogen atom, an alkyl group, an alkenyl group, an alkynyl group, an alkyl halide group, an aryl group, a hydroxyalkyl group, or an alkoxyalkyl group.

In the compound shown by the general formula (I), $R^1$ and $R^2$ may form a cyclic structure, or $R^1$, $R^2$, and the nitrogen atom may form a cyclic structure, or one of $R^1$ and $R^2$ may have a heteroaromatic structure.

Specific examples of the monoamine compound include monoethanolamine, propylamine, 2,2'-iminodiethanol, bis(2-methoxyethyl)amine, N-(2-methoxyethyl)ethylamine, N-(2-methoxyethyl)isopropylamine, N-(2-methoxyethyl) ethylamine, N-(2-methoxyethyl)-n-propylamine, N-(2-methoxyethyl)methylamine, 3-methoxy-N,N-dimethylbenzylamine, 1-amino-2-propanol, N-benzylethanolamine, N,N-dimethyl-n-propanolamine, 3-n-propoxypropylamine, morpholine, piperidine, 2-pipecoline, 3-pipecoline, 4-pipecoline, p-anisidine(p-methoxyaniline), and the like.

Further examples of the amino group-containing compound include diamine compounds. Examples of the diamine compounds include hexamethylenediamine, 1,3-diaminopropane, 1,2-diaminopropane, 2,2-dimethyl-1,3-propanediamine, N-dimethyl-1,3-propanediamine, dihydrazide isophthalate , dihydrazide adipate, dihydrazide sebacate, dihydrazide dodecanedioate, imidazole, piperazine, N,N'-dimethylethylenediamine, 2,5-dimethyl-1,4-phenylenediamine, 1,3-di(4-piperidyl)propane, and the like.

Further examples of the amino group-containing compound include triamine compounds. Examples of the triamine compounds include 3-amino-5-t-butyl-4-cyanopyrazole, 3-amino-5-isopropyl-4-(1-pyrazolyl)-1H-pyrazole, and the like.

Still further examples of the amino group-containing compound include adenine and the like.

A surface modification group having an amide bond that is formed on the surface of the carbon black may be produced by causing the hydrophilic surface functional group of the carbon black and the amino group-containing compound to undergo a dehydration-condensation reaction in the presence of the triazine condensing agent. The triazine condensing agent is preferably DMT-MM that ensures a high reaction yield in water, methanol, ethanol, or 2-propanol. It is also possible to use a carbodiimide water-soluble condensing agent (EDC (WSC)). However, the yield achieved by EDC is equal to or less than half the yield achieved by DMT-MM. Moreover, N-acylurea produced as a by-product may promote aggregation of the dispersion. Therefore, it is undesirable to use EDC when carrying out a reaction in a protic solvent (particularly water). Moreover, a sufficient reaction rate may not be achieved when using a carbodiimide condensing agent in the absence of a hydroxybenzotriazole compound (reaction accelerator).

The surface modification group having an amide bond that is formed on the surface of the carbon black exhibits hydrophilicity so that the surface-treated carbon black can be advantageously dispersed in the aqueous medium.

The surface-treated carbon black may have a hydrophilic surface functional group such as a carboxyl group or a hydroxyl group, in addition to the surface modification group that is produced by causing the hydrophilic surface functional group of the carbon black and the amino group-containing compound to undergo a dehydration-condensation reaction to form an amide bond. Some or all of the hydrophilic surface functional groups may be neutralized with a counter ion.

Examples of the counter ion include counter ions obtained by cationization of alkali metals, ammonia, organic amines (e.g., ethanolamine, triethanolamine, dimethylaminoethanol, morpholine, N-methylmorpholine, diethylene glycol amine, phenethylamine, N-benzylethanolamine, benzylamine, tris(hydroxymethyl)aminomethane, bis(methoxyethyl) amine, and quaternary amines), basic amino acids, imidazole, imidazole derivatives (e.g., 2-methylimidazole), and the like.

The surface-treated carbon black according to the present invention exhibits intermolecular interaction and reactivity with paper when inkjet-printed on paper due to a linking group derived from the amino group-containing compound. The surface-treated carbon black thus prevents a strike-through phenomenon (i.e., the ink flows through the fibers and reaches the other side of the paper), or improves the fixability. When the surface-treated carbon black according to the present invention has a carboxyl group as the hydrophilic surface functional group, the surface-treated carbon black exhibits affinity for a solvent, dispersion stability, etc. When the solvent is a compound having an alcoholic hydroxyl group as the main component. When the surface-treated carbon black according to the present invention has a hydroxyl group as the hydrophilic surface functional group, the surface-treated carbon black exhibits affinity for a solvent when the solvent is a compound having an alcoholic hydroxyl group as the main component.

When the surface-treated carbon black according to the present invention has a carboxyl group or a hydroxyl group as the hydrophilic surface functional group, the surface-treated carbon black exhibits self-dispersibility (i.e., a capability of maintaining the dispersion state in the absence of a surfactant) in an aqueous medium. Therefore, when the surface-treated carbon black is inkjet-printed on paper using an aqueous medium that contains an alcoholic hydroxyl group (e.g., glycerol), the surface-treated carbon black prevents a strike-through phenomenon (i.e., the ink flows through the fibers and reaches the other side of the paper), or improves the fixability due to reactivity with paper.

Examples of the surface-treated carbon black that has been chemically modified by causing the carboxyl group (i.e., hydrophilic surface functional group) of the carbon black and the monoamine compound (i.e., amino group-containing compound) to undergo a dehydration-condensation reaction include carbon black that has a $-CO-NR^1R^2$ group (wherein $R^1$ represents a hydrogen atom, an alkyl group, an alkenyl group, an alkynyl group, an alkyl halide group, an aryl group, a hydroxyalkyl group, or an alkoxyalkyl group, and $R^2$ represents a hydrogen atom, an alkyl group, an alkenyl group, an alkynyl group, an alkyl halide group, an aryl group, a hydroxyalkyl group, or an alkoxyalkyl group), a $-COO^-M^+$ group (wherein $M^+$ represents a counter ion), and a hydroxyl group. This surface-treated carbon black is schematically shown by the following structural formula (II).

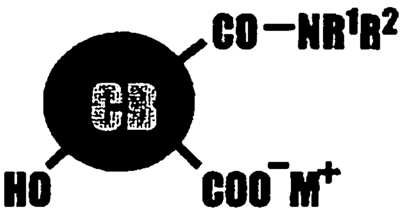

(II)

wherein "CB" represents the carbon black skeleton, and "-CO-$NR^1R^2$" represents a chemical modification group produced by formation of an amide bond due to a dehydration-condensation reaction between the carboxyl group (i.e., hydrophilic surface functional group) of the carbon black and the monoamine compound (i.e., amino group-containing compound).

In the above surface-treated carbon black, $R^1$ represents a hydrogen atom, an alkyl group, an alkenyl group, an alkynyl group, an alkyl halide group, an aryl group, a hydroxyalkyl group, or an alkoxyalkyl group, and $R^2$ represents a hydrogen atom, an alkyl group, an alkenyl group, an alkynyl group, an alkyl halide group, an aryl group, a hydroxyalkyl group, or an alkoxyalkyl group. In the above surface-treated carbon black, $R^1$ and $R^2$ may form a cyclic structure, or $R^1$, $R^2$, and the nitrogen atom may form a cyclic structure, or one of $R^1$ and $R^2$ may have a heteroaromatic structure.

Examples of the -CO-$NR^1R^2$ group in the above surface-treated carbon black include a group produced by formation of an amide bond due to a dehydration-condensation reaction between the carboxyl group and the monoamine compound (e.g., monoethanolamine, propylamine, 2,2'-iminodiethanol, bis(2-methoxyethyl)amine, N-(2-methoxyethyl) ethylamine,

N-(2-methoxyethyl)isopropylamine, N-(2-methoxyethyl)ethylamine, N-(2-methoxyethyl)-n-propylamine, N-(2-methoxyethyl)methylamine, 3-methoxy-N,N-dimethylbenzylamine, 1-amino-2-propanol, N-benzylethanolamine, N,N-dimethyl-n-propanolamine, 3-n-propoxypropylamine, morpholine, 2-pipecoline, 3-pipecoline, 4-pipecoline, or p-anisidine (p-methoxyaniline)).

$M^+$ in the above surface-treated carbon black is a counter ion of an anionized carboxyl group (-$COO^-$). Examples of the counter ion include counter ions obtained by cationization of alkali metals, ammonia, organic amines (e.g., ethanolamine, triethanolamine, dimethylaminoethanol, morpholine, N-methylmorpholine, diethylene glycol amine, phenethylamine, N-benzylethanolamine, benzylamine, tris(hydroxymethyl)aminomethane, bis(methoxyethyl)amine, and quaternary amine), basic amino acids, imidazole, imidazole derivatives (e.g., 2-methylimidazole), and the like.

In the surface-treated carbon black, the hydroxyl group (-OH) does not undergo a condensation reaction, and remains in the form of -OH in the final pH region (pH 6.0 to 7.6) of the surface-treated carbon black aqueous dispersion.

The surface-treated carbon black prevents a strike-through phenomenon (i.e., the ink flows through the fibers and reaches the other side of the paper), or improves the fixability when inkjet-printed on paper due to the chemical composition of $R^1$ and $R^2$ of the -$NR^1R^2$ group. The molecular structure bonded to the carboxyl group exhibits affinity for a solvent, dispersion stability, etc., when the solvent is a compound having an alcoholic hydroxyl group as the main component. The hydroxyl group exhibits affinity for a solvent when the solvent is a compound having an alcoholic hydroxyl group as the main component.

The affinity for the solvent is mainly affected by the intermolecular force due to the functional group and the chemical composition of the dispersion medium. An alcoholic hydroxyl group produced by the ring-opening reaction of the oxirane ring promotes interaction with the intermolecular force of the alcoholic solvent of the dispersion medium. It is possible to produce a dispersion that is suitable for various alcoholic media by selecting the substituent structure.

The -$COO^-M^+$ group and the -OH group provide the surface-treated carbon black used in the present invention with self-dispersibility (i.e., a capability of maintaining a dispersion state in the absence of a surfactant) in the aqueous medium.

Since the surface-treated carbon black used in the present invention has the amidated carboxyl group and the -$COO^-M^+$ group on its surface, the surface-treated carbon black prevents a strike-through phenomenon (i.e., the ink flows through the fibers and reaches the other side of the paper), or improves the fixability due to reactivity with paper, when the surface-treated carbon black is inkjet-printed on paper using an aqueous medium that contains an alcoholic hydroxyl group (e.g., glycerol).

The surface-treated carbon black used in the present invention has the above structure. In order to provide the surface-treated carbon black with self-dispersibility in the dispersion, it is preferable that the surface-treated carbon black have a hydroxyl group content of 20 to 150 μmol/g and a content of the -$NR^1R^2$ group bonded to the carboxyl group of 150 to 1200 μmol/g based on the weight of the carbon black.

The surface-treated carbon black aqueous dispersion according to the present invention is produced by dispersing the surface-treated carbon black that has been chemically modified by thus forming an amide bond in the aqueous

medium at an appropriate concentration. When using the surface-treated carbon black aqueous dispersion as an aqueous ink, the concentration (solid content) of the surface-treated carbon black is adjusted to 5 to 20 mass%.

If the concentration of the surface-treated carbon black is less than 5 mass%, it may be necessary to remove unnecessary solvent from the dispersion when producing an ink having a given pigment concentration. Moreover, a change in properties of the dispersion may occur. Furthermore, the particles may precipitate during storage due to low viscosity, so that the print image density may become unstable. If the concentration of the surface-treated carbon black is more than 20 mass%, the carbon black particles may easily aggregate, so that an increase in viscosity or precipitation of the particles may occur during storage.

As the aqueous medium of the surface-treated carbon black aqueous dispersion, water, or an aqueous medium that includes 0 to 50 mass% of an alcoholic hydroxyl group-containing solvent in addition to water that is used as the main component of the dispersion medium, may be used.

The alcoholic hydroxyl group-containing solvent may be a lower alcohol, a higher alcohol, or a polyhydric alcohol (e.g., glycol solvent or a monoether thereof). A mixture of a low-boiling-point alcohol and a high-boiling-point alcohol may also be used. The alcoholic hydroxyl group-containing solvent may be selected depending on the type of surface-treated carbon black.

Specific examples of the alcoholic hydroxyl group-containing solvent include methanol, ethanol, n-propanol, isopropanol, n-butanol, isobutanol, tert-butyl alcohol, 1-pentanol, isoamyl alcohol, sec-amyl alcohol, 3-pentanol, tert-amyl alcohol, n-hexanol, methylamyl alcohol, 2-ethylbutanol, n-heptanol, 2-heptanol, 3-heptanol, n-octanol, 2-octanol, 2-ethylhexanol, 3,5,5-trimethylhexanol, nonanol, n-decanol, undecanol, trimethylnonyl alcohol, tetradecanol, heptadecanol, cyclohexanol, 2-methylcyclohexanol, benzyl alcohol, other higher alcohols, and the like.

Specific examples of the polyhydric alcohol include ethylene glycol, propylene glycol, 1,3-butylene glycol, diethylene glycol, dipropylene glycol, isopentyl diol, triethylene glycol, 3-methyl-1,3-butanediol, 1,3-propanediol, 1,3-butanediol, 1,5-pentanediol, hexylene glycol, and octylene glycol. Specific examples of the glycol monoether solvent include ethylene glycol monohexyl ether, ethylene glycol monophenyl ether, ethylene glycol monobenzyl ether, ethylene glycol mono-2-ethyl butyl ether, ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, triethylene glycol monoethyl ether, triethylene glycol monobutyl ether, tetraethylene glycol monobutyl ether, 3-methyl-3-methoxy-1-butanol, 3-methoxy-1-butanol, propylene glycol monomethyl ether, propylene glycol monoethyl ether, propylene glycol monopropyl ether, propylene glycol monobutyl ether, propylene glycol phenyl ether, propylene glycol tert-butyl ether, dipropylene glycol monomethyl ether, dipropylene glycol monoethyl ether, dipropylene glycol monopropyl ether, dipropylene glycol monobutyl ether, tripropylene glycol monomethyl ether, tripropylene glycol monobutyl ether, tetrapropylene glycol monobutyl ether, and the like.

The surface-treated carbon black aqueous dispersion according to the present invention may be prepared as an aqueous black ink for inkjet printers or the like by adding a penetrant, a surfactant, a resin (fixing aid), a UV absorber, an antioxidant, a leveling agent, a water-soluble solvent, etc.

A method of producing a surface-treated carbon black aqueous dispersion according to the present invention includes oxidizing carbon black to produce a hydrophilic surface functional group, dispersing the carbon black in an aqueous medium to obtain an aqueous medium dispersion, adding an amino group-containing compound and a triazine condensing agent to the aqueous medium dispersion, causing the hydrophilic surface functional group of the carbon black and the amino group-containing compound to undergo a dehydration-condensation reaction by stirring the aqueous medium dispersion at room temperature, and removing large particles, unreacted amino group-containing compound, and the triazine condensing agent, followed by neutralization, purification, and concentration.

FIG 1 is a flowchart showing an example of a production process illustrative of the method according to the present invention.

In the method according to the present invention, carbon black similar to the above carbon black is oxidized to produce a hydrophilic surface functional group. The carbon black may be oxidized by gas-phase oxidation, liquid-phase oxidation, or the like. The term "gas-phase oxidation" refers to oxidizing the carbon black by exposing the carbon black to a gaseous atmosphere (e.g., ozone or air). Gas-phase oxidation such as ozone oxidation and air oxidation has advantages in that the drying cost is unnecessary, and the operation is facilitated as compared with liquid-phase oxidation, for example. When subjecting the carbon black to liquid-phase oxidation, the carbon black is added to an aqueous solution of an oxidizing agent (e.g., hydrogen peroxide solution, nitric acid, sulfuric acid, chlorate, persulfate, or percarbonate), and the mixture is stirred. The liquid-phase oxidation conditions are adjusted by controlling the oxidizing agent concentration, the temperature, the processing time, etc. so that the desired carboxyl group content and the desired hydroxyl group content are achieved.

A wet oxidation process is described in detail below.

The carbon black, the oxidizing agent, and the aqueous medium (preferably deionized water) are mixed in a stirring tank in an appropriate quantitative ratio. The mixture is sufficiently stirred in the stirring tank at an appropriate temperature (e.g., room temperature to 90°C) to prepare a heated slurry. The carbon black is oxidized within the heated

slurry so that hydrophilic functional groups (e.g., carboxyl groups and hydroxyl groups) are produced on the surface of the carbon black aggregates. The temperature of the slurry is preferably adjusted to 60 to 90°C.

In this case, the carbon black can be uniformly and effectively oxidized by subjecting the carbon black to wet or dry oxidation in advance so that the carbon black can be efficiently dispersed in the slurry. It is also preferable to add a surfactant so that the carbon black is uniformly dispersed in the slurry. As the surfactant, an anionic surfactant, a nonionic surfactant, or a cationic surfactant may be used.

Since salts produced by oxidation inhibit a neutralization reaction, and cause re-aggregation of the carbon black, reduced salts are removed. Reduced salts may be removed using a separation membrane such as an ultrafilter (UF) membrane, a reverse osmosis (RO) membrane, or an electrodialysis membrane.

The mixture is then stirred while adding an alkaline solution to neutralize the mixture. Examples of the neutralizing agent include alkali salts such as potassium hydroxide and sodium hydroxide, ammonia, and organic amines such as ethanolamine, triethanolamine, dimethylaminoethanol, and quaternary amines.

The mixture may be neutralized at room temperature, but it is preferable to add the neutralizing agent to the slurry contained in the stirring tank, and stir the slurry at 95 to 105°C for 2 to 5 hours in order to completely neutralize the mixture.

Salts produced by neutralization are removed using a separation membrane such as an ultrafiltration (UF) membrane, a reverse osmosis (RO) membrane, or an electrodialysis membrane, and undispersed aggregates and large particles are removed by centrifugation, filtration, or the like. It is also preferable to discharge the slurry at high speed under high pressure so that collision occurs between the carbon black particles (i.e., the aggregates are broken off).

After dispersing the resulting carbon black in an aqueous medium to obtain an aqueous medium dispersion, an amino group-containing compound and a triazine condensing agent are added to the aqueous medium dispersion. The hydrophilic surface functional group of the carbon black and the amino group-containing compound are caused to undergo a dehydration-condensation reaction to form an amide bond by stirring the aqueous medium dispersion at room temperature.

In the method according to the present invention, the aqueous medium, the amino group-containing compound, and the triazine condensing agent may be the same as those described above.

The amount of the amino group-containing compound is preferably adjusted so that the number of amino group-containing compounds is 0.03 to 1.35 times the number of hydrophilic functional groups on the surface of the carbon black. If the amount of the amino group-containing compound is too small, the fixability of an image formed using an ink prepared using the surface-treated carbon black aqueous dispersion may deteriorate. If the amount of the amino group-containing compound is too large, the storage stability of the surface-treated carbon black aqueous dispersion may deteriorate.

The triazine condensing agent is preferably used in an amount 1.0 to 1.5 times (molar ratio) the amount of the amino group-containing compound. A water-soluble organic solvent may be added to the dispersion. In this case, the concentration of the water-soluble organic solvent is preferably 5 to 80 mass%.

The following reaction formula (III) schematically shows an example in which the carbon black is chemically modified by causing the carboxyl group (i.e., hydrophilic surface functional group) of the carbon black and the monoamine compound (i.e., amino group-containing compound) to undergo a dehydration-condensation reaction to obtain surface-treated carbon black.

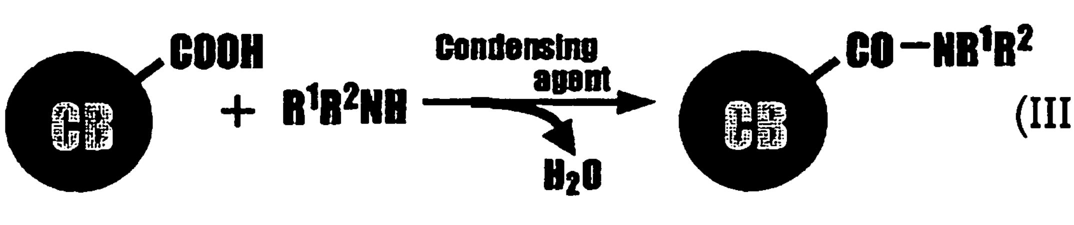


(III)

wherein "CB" represents the carbon black skeleton, "Condensing agent" represents the triazine condensing agent, and "-CO-$NR^1R^2$" represents a chemical modification group produced by formation of an amide bond due to a dehydration-condensation reaction between the carboxyl group (-COOH) (i.e., hydrophilic surface functional group) of the carbon black and the monoamine compound ($R^1R^2NH$) (i.e., amino group-containing compound).

In the surface-treated carbon black obtained by the above reaction, $R^1$ represents a hydrogen atom, an alkyl group, an alkenyl group, an alkynyl group, an alkyl halide group, an aryl group, a hydroxyalkyl group, or an alkoxyalkyl group, and $R^2$ represents a hydrogen atom, an alkyl group, an alkenyl group, an alkynyl group, an alkyl halide group, an aryl group, a hydroxyalkyl group, or an alkoxyalkyl group. $R^1$ and $R^2$ may form a cyclic structure, or $R^1$, $R^2$, and the

nitrogen atom may form a cyclic structure, or one of $R^1$ and $R^2$ may have a heteroaromatic structure.

Large particles are then classified and removed using a centrifuge or the like. Unreacted amino group-containing compound and the triazine condensing agent are removed by ultrafiltration or the like, and the mixture is concentrated by removing the aqueous medium.

The hydrophilic surface functional groups (e.g., carboxyl groups and hydroxyl groups) that remain in the carbon black aqueous medium dispersion are then neutralized by adding a neutralizer (e.g., an alkali salt such as potassium hydroxide or sodium hydroxide, ammonia, an organic amine such as ethanolamine, triethanolamine, dimethylaminoethanol, morpholine, N-methylmorpholine, or a quaternary amine, a basic amino acid, imidazole, or an imidazole derivative such as 2-methylimidazole. Neutralization is performed at a temperature of 60 to 95°C and a pH of 6.8 to 7.6.

The resulting dispersion is subjected to classification using a centrifuge or the like to remove large carbon black particles, and purified and concentrated using a reverse osmosis membrane, a hollow fiber membrane, a membrane filter, an ultrafiltration membrane, or the like to remove unnecessary neutralizer and aqueous medium. A surface-treated carbon black aqueous dispersion can thus be obtained.

The carbon black can thus be chemically modified by forming an amide bond due to a dehydration-condensation reaction between the carboxyl group (i.e., hydrophilic surface functional group) of the carbon black and the monoamine compound (i.e., amino group-containing compound), and unreacted hydroxyl groups and carboxyl groups present on the surface of the carbon black are neutralized to produce a surface-treated carbon black aqueous dispersion in which the carbon black is dispersed in the aqueous medium.

The resulting surface-treated carbon black aqueous dispersion may be prepared as an aqueous black ink for inkjet printers or the like by adding a penetrant, a surfactant, a resin (fixing aid), a UV absorber, an antioxidant, a leveling agent, a water-soluble solvent, etc.

## EXAMPLES

The present invention is further described below by way of examples.

### Example 1

Carbon black ("Seast 9H" manufactured by Tokai Carbon Co., Ltd., specific surface area by nitrogen adsorption: 142 $m^2$/g, DBP absorption: 130 $cm^3$/100 g, pH: 6.0) was oxidized with ozone for 8.5 hours at a pressure of 0.02 MPa and a flow rate of 5 l/min using an ozone generator ("CO-101" manufactured by Yamato Scientific Co., Ltd.). After the addition of purified water, the mixture was stirred to prepare a slurry having a carbon black concentration of 5 wt%.

The carboxyl group content and the hydroxyl group content of the oxidized carbon black were measured using the following methods, and found to be 560 μmol/g and 118 μmol/g, respectively.

<Measurement of carboxyl group content>

About 2 to 5 g of the oxidized carbon black was added to a 0.976 N sodium hydrogen carbonate aqueous solution. The mixture was shaken for about 6 hours, and filtered. The carboxyl group content was measured by titration.

<Measurement of hydroxyl group content>

2,2'-Diphenyl-1-picrylhydrazyl (DPPH) was dissolved in carbon tetrachloride to prepare a $5 \times 10^{-4}$ mol/l solution. 0.1 to 0.6 g of oxidized carbon black was added to the solution. The mixture was stirred in a thermostat bath at 60°C for 6 hours, and filtered. The filtrate was measured using a UV absorptiometer, and the hydroxyl group content was calculated from the absorbance.

10.5 g of a 10 wt% aqueous solution of 2,2'-iminodiethanol (Mw: 105.14), 42.8 g of a 10 wt% aqueous solution of benzylamine (Mw: 107.15), and 11.1 g of DMT-MM (triazine condensing agent) (powder) were added to 1 kg of the slurry. The mixture was stirred at 25°C for 5 hours. The dispersion was subjected to ultrafiltration to obtain a dispersion having a carbon black concentration of 5 wt%. After the addition of 80 g of 0.5M aqueous ammonia, the mixture was stirred at 75°C for 3 hours. The dispersion was centrifuged at 6000 rpm to remove large particles. The supernatant liquid was subjected to ultrafiltration, purification, and concentration to obtain an aqueous dispersion having a carbon black concentration of 15 wt%.

### Example 2

Carbon black ("Seast 9H" manufactured by Tokai Carbon Co., Ltd.) was oxidized with ozone for 8.2 hours at a pressure of 0.02 MPa and a flow rate of 5 l/min using an ozone generator ("CO-101" manufactured by Yamato Scientific

Co., Ltd.). After the addition of purified water, the mixture was stirred to prepare a slurry having a carbon black concentration of 5 wt%.

2.75 g of a 10 wt% aqueous solution of ethanolamine (Mw: 61.08), 40.7 g of a 10 wt% aqueous solution of benzylamine (Mw: 107.15), and 11.1 g of DMT-MM (triazine condensing agent) (powder) were added to 1 kg of the slurry. The mixture was stirred at room temperature for 20 hours. The resulting dispersion was centrifuged at 6000 rpm to remove large particles. The supernatant liquid was subjected to ultrafiltration, purification, and concentration to obtain an aqueous dispersion having a carbon black concentration of 15 wt%.

Example 3

Carbon black ("Seast 9H" manufactured by Tokai Carbon Co., Ltd.) was oxidized with ozone for 7.5 hours at a pressure of 0.02 MPa and a flow rate of 5 l/min using an ozone generator ("CO-101" manufactured by Yamato Scientific Co., Ltd.). After the addition of purified water, the mixture was stirred to prepare a slurry having a carbon black concentration of 10 wt%.

1.5 g of a 10 wt% aqueous solution of bis(2-methoxyethyl)amine (Mw: 133.19), 6.4 g of a 10 wt% aqueous solution of N-benzylethanolamine (Mw: 150.22), 37.5 g of a 10 wt% aqueous solution of benzylamine (Mw: 107.15), and 11.1 g of DMT-MM (triazine condensing agent) (powder) were added to 1 kg of the slurry. The mixture was stirred at room temperature for 20 hours. The dispersion was centrifuged at 6000 rpm. The supernatant liquid was subjected to ultrafiltration, purification, and concentration to obtain an aqueous dispersion having a carbon black concentration of 15 wt%.

The dispersion was subjected to ultrafiltration to obtain a dispersion having a carbon black concentration of 5 wt%. After the addition of 0.1 kg of 0.5M aqueous ammonia, the mixture was stirred at 90°C for 3 hours. The resulting dispersion was centrifuged at 6000 rpm. The supernatant liquid was subjected to ultrafiltration, purification, and concentration to obtain an aqueous dispersion having a carbon black concentration of 15 wt%.

Comparative Example 1

Carbon black ("Seast 9H" manufactured by Tokai Carbon Co., Ltd.) was oxidized with ozone for 7.5 hours at a pressure of 0.02 MPa and a flow rate of 5 l/min using an ozone generator ("CO-101" manufactured by Yamato Scientific Co., Ltd.). After the addition of purified water, the mixture was stirred to prepare a slurry having a carbon black concentration of 10 wt%. The slurry was stirred at 70°C for 2 hours, and centrifuged at 6000 rpm. The supernatant liquid was subjected to ultrafiltration, purification, and concentration to obtain an aqueous dispersion having a carbon black concentration of 15 wt%.

Comparative Example 2

Carbon black ("Seast 9H" manufactured by Tokai Carbon Co., Ltd.) was oxidized with ozone for 7.5 hours at a pressure of 0.02 MPa and a flow rate of 5 l/min using an ozone generator ("CO-101" manufactured by Yamato Scientific Co., Ltd.). 20 g of the oxidized carbon black was added to 400 g of methanol (manufactured by Wako Pure Chemical Industries, Ltd.). After the addition of 200 ml of concentrated sulfuric acid (98 mass%, manufactured by Wako Pure Chemical Industries, Ltd.), the mixture was heated (esterified) at 65°C for 6 hours with stirring, and centrifuged at 6000 rpm. The supernatant liquid was subjected to ultrafiltration, purification, and concentration to obtain an aqueous dispersion having a carbon black concentration of 15 wt%.

Comparative Example 3

Carbon black ("Seast 9H" manufactured by Tokai Carbon Co., Ltd.) was oxidized with ozone for 7.5 hours at a pressure of 0.02 MPa and a flow rate of 5 l/min using an ozone generator ("CO-101" manufactured by Yamato Scientific Co., Ltd.). After the addition of purified water, the mixture was stirred to prepare a slurry having a carbon black concentration of 10 wt%.

7 g of 2,2'-iminodiethanol and 15 g of DCC (carbodiimide condensing agent) were added to 1 kg of the slurry. The mixture was stirred at 25°C for 4 hours. The reaction solution was subjected to ultrafiltration to obtain a dispersion having a carbon black concentration of 5 wt%. After the addition of 0.1 kg of 0.5M aqueous ammonia, the mixture was stirred at 90°C for 3 hours. The resulting dispersion was centrifuged at 6000 rpm. The supernatant liquid was subjected to ultrafiltration, purification, and concentration to obtain an aqueous dispersion having a carbon black concentration of 15 wt%.

The above aqueous dispersion was mixed with a mixture of tripropylene glycol monomethyl ether (TPGME) and water (=7/3), and a surfactant ("Surfynol 104E" manufactured by Nissin Chemical Co., Ltd.) (0.3%), so that the

carbon black concentration was 4%. The mixture was sufficiently stirred to prepare an ink.

The strike-through resistance, the fixability, and the image density of the resulting ink were measured and evaluated by the following methods. The results are shown in Table 1.

<Strike-through resistance>

The amber density of the image printing side and the rear side was measured using a reflection densitometer (Status A). The strike-through rate was calculated by the following expression, and the strike-through resistance was evaluated in accordance with the following criteria.

$$\text{Strike-through rate (\%)} = (\text{reflection density of rear side}) / (\text{reflection density of printing side}) \times 100$$

Good: The strike-through rate was less than 20%.
Fair: The strike-through rate was 20% or more and less than 30%.
Bad: The strike-through rate was 30% or more.

<Fixability>

A black solid image printed on paper was scratched using a 500-yen coin (clean edge) when one minute had elapsed after printing. The fixability was visually evaluated by a coin scratch test in accordance with the following criteria.
Good: No change was observed.
Fair: Peeling partially occurred (i.e., the surface of the paper was observed).
Bad: Peeling occurred.

<Evaluation of image density>

A line-head printer provided with a piezo recording head (nozzle diameter: 25 μm, number of nozzles: 512, nozzle resolution: 600 dpi (dots per inch (2.54 cm)) was used. A solid image was printed on J paper (manufactured by Konica Minolta Business Technologies, Inc., (64 g/m$^2$, A4 size) using each ink so that a 5 mm margin remained on each side (resolution: 600×600 dpi, amount of ink: 10 ml/m$^2$).

Image density:

The density of the solid image was measured using a Macbeth densitometer, and evaluated in accordance with the following criteria.
A: The OD value of the black ink was 1.4 or more.
B: The OD value of the black ink was 1.3 or more and less than 1.4.
C: The OD value of the black ink was less than 1.3.

TABLE 1

| | Strike-through resistance | Fixability | Image density |
|---|---|---|---|
| Example 1 | Good | Good | B |
| Example 2 | Good | Good | A |
| Example 3 | Good | Good | A |
| Comparative Example 1 | Bad | Bad | C |
| Comparative Example 2 | Bad | Bad | C |
| Comparative Example 3 | Bad | Fair | C |

As is clear from Table 1, the carbon black aqueous dispersions of Examples 1 to 3 exhibited excellent image density when using the ink composition for a line-head printer, and also exhibited excellent strike-through resistance

and fixability.

INDUSTRIAL APPLICABILITY

The present invention can provide a surface-treated carbon black aqueous dispersion that produces an image that exhibits excellent image density, strike-through resistance, and fixability as a line-head printing aqueous black ink, and may be used as a component of a black ink that produces a highly reliable high-quality image by high-speed printing.

According to the present invention, a surface-treated carbon black aqueous dispersion can be produced without forming a network between the carbon black particles in an aqueous medium by causing a hydrophilic surface functional group of the carbon black and an amino group-containing compound to undergo a dehydration-condensation reaction using a triazine condensing agent.

## Claims

1. A method of producing a surface-treated carbon black aqueous dispersion comprising
causing a hydrophilic surface functional group of carbon black and an amino group-containing compound to undergo a dehydration-condensation reaction in an aqueous medium in the presence of a triazine condensing agent to form an amide bond to obtain a surface-treated carbon black aqueous dispersion in which the chemically-modified surface treated carbon black is dispersed in the aqueous medium.

2. The method of producing a surface-treated carbon black aqueous dispersion according to claim 1, comprising oxidizing the carbon black to produce a hydrophilic surface functional group, dispersing the carbon black in the aqueous medium to obtain an aqueous medium dispersion, mixing the amino group-containing compound and the triazine condensing agent with the aqueous medium dispersion, causing the hydrophilic surface functional group of the carbon black and the amino group-containing compound to undergo a dehydration-condensation reaction by stirring the aqueous medium dispersion at room temperature, and removing large particles, unreacted amino group-containing compound, a decomposition product of the triazine condensing agent, and unreacted triazine condensing agent, followed by neutralization, purification, and concentration.

3. The method of producing a surface-treated carbon black aqueous dispersion according to claim 1 or 2, wherein the hydrophilic surface functional group of the carbon black is a carboxyl group.

4. The method of producing a surface-treated carbon black aqueous dispersion according to any one of claims 1 to 3, wherein the surface of the carbon black included in the surface-treated carbon black aqueous dispersion has a $-CO-NR^1R^2$ group (wherein $R^1$ represents a hydrogen atom, an alkyl group, an alkenyl group, an alkynyl group, an alkyl halide group, an aryl group, a hydroxyalkyl group, or an alkoxyalkyl group, and $R^2$ represents a hydrogen atom, an alkyl group, an alkenyl group, an alkynyl group, an alkyl halide group, an aryl group, a hydroxyalkyl group, or an alkoxyalkyl group), a $-COO^-M^+$ group (wherein $M^+$ represents a counter ion), and a hydroxyl group, the content of the $-CO-NR^1R^2$ group being 150 to 1200 μmol/g and the content of the hydroxyl group being 20 to 150 μmol/g based on the unit mass of the carbon black.

5. The method of producing a surface-treated carbon black aqueous dispersion according to any one of claims 1 to 4, wherein the concentration of the surface-treated carbon black in the surface-treated carbon black aqueous dispersion is 5 to 20 mass%.

## Patentansprüche

1. Verfahren zur Herstellung einer wässrigen Dispersion von oberflächenbehandeltem Ruß, umfassend
das Bewirken einer hydrophilen Oberflächen-funktionellen Gruppe von Ruß und einer Aminogruppen-enthaltenden Verbindung in einem wässrigen Medium in Gegenwart eines Triazin-Kondensationsagens' eine Dehydratations-Kondensationsreaktion einzugehen, um eine Amidbindung zu bilden, um eine wässrige Dispersion von oberflächenbehandeltem Ruß zu erhalten, in welcher der chemisch modifizierte oberflächenbehandelte Ruß in dem wässrigen Medium dispergiert ist.

2. Verfahren zur Herstellung einer wässrigen Dispersion von oberflächenbehandeltem Ruß nach Anspruch 1, umfassed das Oxidieren des Rußes, um eine hydrophile Oberflächen-funktionelle Gruppe zu erzeugen, das Dispergieren des

Rußes in dem wässrigen Medium, um eine Dispersion in einem wässrigen Medium zu erhalten, das Mischen der Aminogruppen-enthaltenden Verbindung und des Triazin-Kondensationsagens' mit der Dispersion in einem wässrigen Medium, das Bewirken der hydrophilen Oberflächen-funktionellen Gruppe des Rußes und der Aminogruppen-enthaltenden Verbindung eine Dehydratations-Kondensationsreaktion durch Rühren der Dispersion in einem wässrigen Medium bei Raumtemperatur einzugehen, und das Entfernen großer Teilchen, nichtreagierter Aminogruppen-enthaltender Verbindung, eines Zersetzungsprodukts des Triazin-Kondensationsagens' und nicht-reagierten Triazin-Kondensationsagens', gefolgt von Neutralisation, Reinigung und Aufkonzentration.

**3.** Verfahren zur Herstellung einer wässrigen Dispersion von oberflächenbehandeltem Ruß nach Anspruch 1 oder 2, wobei die hydrophile Oberflächen-funktionelle Gruppe des Rußes eine Carboxylgruppe ist.

**4.** Verfahren zur Herstellung einer wässrigen Dispersion von oberflächenbehandeltem Ruß nach einem der Ansprüche 1 bis 3, wobei die Oberfläche des Rußes, der in der wässrigen Dispersion von oberflächenbehandeltem Ruß enthalten ist, eine -CO-$NR^1R^2$-Gruppe (wobei $R^1$ ein Wasserstoffatom, eine Alkylgruppe, eine Alkenylgruppe, eine Alkinylgruppe, eine Halogenalkylgruppe, eine Arylgruppe, eine Hydroxyalkylguppe oder eine Alkoxyalkylgruppe darstellt, und $R^2$ ein Wasserstoffatom, eine Alkylgruppe, eine Alkenylgruppe, eine Alkinylgruppe, eine Halogenalkylgruppe, eine Arylgruppe, eine Hydroxyalkylgruppe oder eine Alkoxyalkylgruppe darstellt), eine $COO^-M^+$-Gruppe (wobei $M^+$ ein Gegenion darstellt) und eine Hydroxylgruppe aufweist, wobei der Anteil der -CO-$NR^1R^2$-Gruppe 150 bis 1200 μmol/g beträgt und der Anteil der Hydroxylgruppe 20 bis 150 μmol/g beträgt, bezogen auf die Einheitsmasse des Rußes.

**5.** Verfahren zur Herstellung einer wässrigen Dispersion von oberflächenbehandeltem Ruß nach einem der Ansprüche 1 bis 4, wobei die Konzentration des oberflächenbehandelten Rußes in der wässrigen Dispersion von oberflächenbehandeltem Ruß 5 bis 20 Massenprozent beträgt.

**Revendications**

**1.** Procédé de production d'une dispersion aqueuse de noir de carbone traité en surface, comprenant
l'induction de la réaction de déshydratation-condensation d'un radical fonctionnel hydrophile de surface du noir de carbone avec un composé contenant un radical amino en milieu aqueux, en présence d'un agent de condensation triazine, pour former une liaison amide de manière à obtenir une dispersion aqueuse de noir de carbone traité en surface, dans laquelle le noir de carbone traité en surface est dispersé dans le milieu aqueux.

**2.** Procédé de production d'une dispersion aqueuse de noir de carbone traité en surface selon la revendication 1, comprenant l'oxydation du noir de carbone pour produire un radical fonctionnel hydrophile de surface, la dispersion du noir de carbone dans le milieu aqueux pour obtenir une dispersion en milieu aqueux, le mélange du composé contenant un radical amino et de l'agent de condensation triazine avec la dispersion en milieu aqueux, l'induction de la réaction de déshydratation-condensation du radical fonctionnel hydrophile de surface du noir de carbone avec le composé contenant un radical amino par agitation de la dispersion en milieu aqueux à température ambiante, et l'élimination des grandes particules, du composé contenant un radical amino n'ayant pas réagi et de l'agent de condensation triazine n'ayant pas réagi, suivie de la neutralisation, la purification et la concentration.

**3.** Procédé de production d'une dispersion aqueuse de noir de carbone traité en surface selon la revendication 1 ou 2, où le radical fonctionnel hydrophile de surface du noir de carbone est un radical carboxyle.

**4.** Procédé de production d'une dispersion aqueuse de noir de carbone traité en surface selon l'une quelconque des revendications 1 à 3, où la surface du noir de carbone présent dans la dispersion aqueuse de noir de carbone traité en surface, présente un radical -CO-$NR^1R^2$ (où $R^1$ représente un atome d'hydrogène, un radical alkyle, un radical alcényle, un radical alcynyle, un radical alkylhalogénure, un radical aryle, un radical hydroxyalkyle ou un radical alcoxyalkyle, et $R^2$ représente un atome d'hydrogène, un radical alkyle, un radical alcényle, un radical alcynyle, un radical alkylhalogénure, un radical aryle, un radical hydroxyalkyle ou un radical alcoxyalkyle), un radical -$COO^-M^+$ (où $M^+$ représente un contre-ion), et un radical hydroxyle, la teneur en radical - CO-$NR^1R^2$ se situant dans l'intervalle allant de 150 à 1200 μmoles/g et la teneur en radical hydroxyle se situant dans l'intervalle allant de 20 à 150 μmoles/g, sur base de la masse unitaire du noir de carbone.

**5.** Procédé de production d'une dispersion aqueuse de noir de carbone traité en surface selon l'une quelconque des revendications 1 à 4, où la concentration du noir de carbone traité en surface dans la dispersion aqueuse du noir

de carbone traité en surface se situe dans l'intervalle allant de 5 à 20% en masse.

FIG. 1

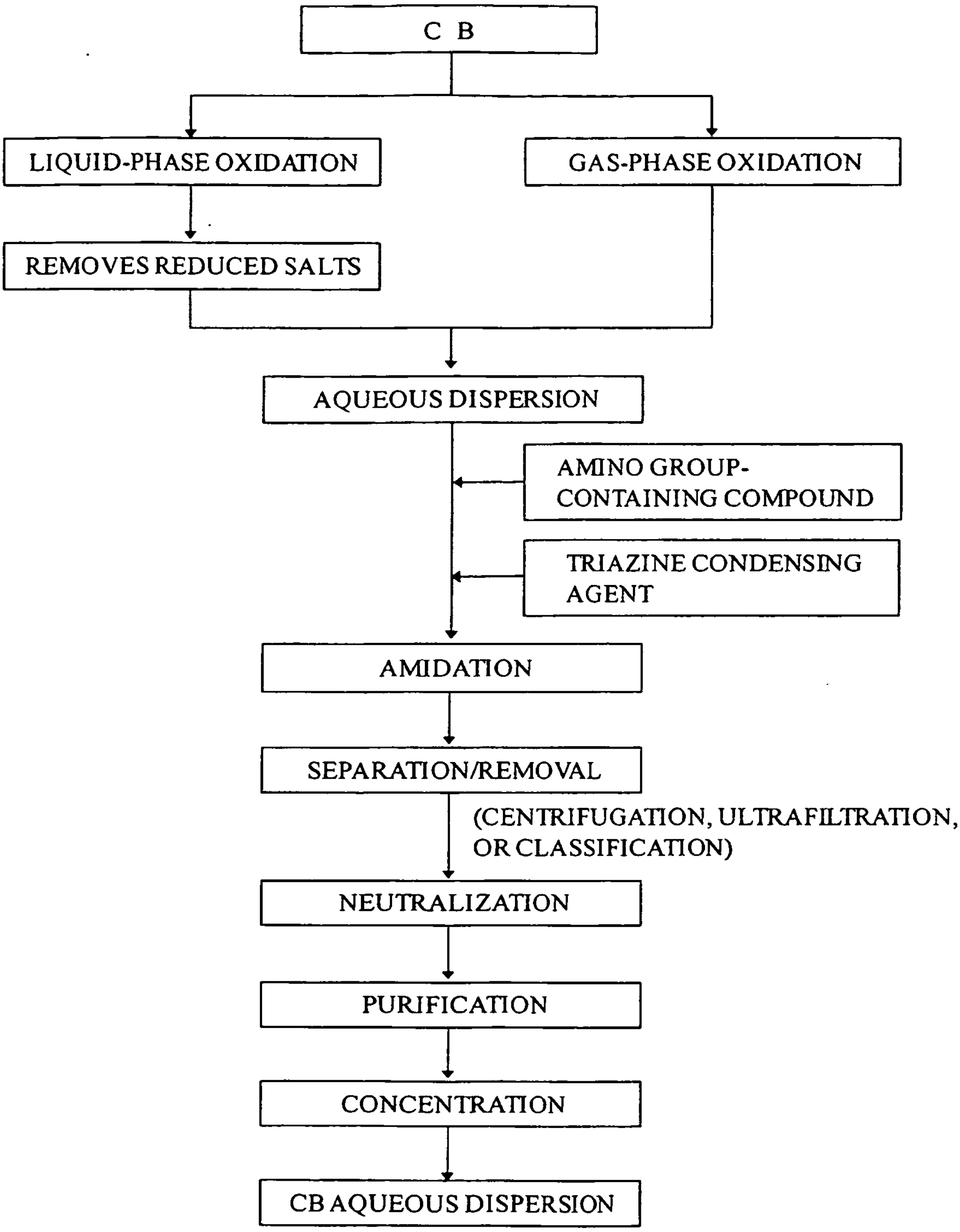
C B
LIQUID-PHASE OXIDATION
GAS-PHASE OXIDATION
REMOVES REDUCED SALTS
AQUEOUS DISPERSION
AMINO GROUP-CONTAINING COMPOUND
TRIAZINE CONDENSING AGENT
AMIDATION
SEPARATION/REMOVAL
(CENTRIFUGATION, ULTRAFILTRATION, OR CLASSIFICATION)
NEUTRALIZATION
PURIFICATION
CONCENTRATION
CB AQUEOUS DISPERSION

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 48018186 A
- JP 8319444 A
- JP 11049974 A
- JP 9286938 A
- JP 11323229 A
- JP 2005255705 A